# EUROPÄISCHE PATENTSCHRIFT

(11) **EP 3 585 177 B1**
(45) Veröffentlichungstag und Bekanntmachung des Hinweises auf die Patenterteilung: **03.07.2024**
(21) Anmeldenummer: 18706431.6
(22) Anmeldetag: 07.02.2018
(51) Int. Cl.: A23C 15/02, A01J 15/02, A01J 15/26, A01J 17/00

(54) **BUTTERUNGSVERFAHREN**
BUTTER-MAKING METHOD
PROCÉDÉ DE BARATTAGE

(30) Priorität: 21.02.2017 DE 102017103562
(43) Veröffentlichungstag der Anmeldung: 01.01.2020
(73) Patentinhaber: GEA Mechanical Equipment GmbH, 59302 Oelde (DE)
(72) Erfinder: KLAPPER, Siegfried, 33442 Herzebrock-Clarholz (DE); BRÄUTIGAM, Carsten, 89168 Niederstotzingen (DE)
(74) Vertreter: Specht, Peter
(86) Internationale Anmeldenummer: PCT/EP2018/052994
(87) Internationale Veröffentlichungsnummer: WO 2018/153660

(56) Entgegenhaltungen:
- EP-A1- 2 319 297
- DE-A1-102009 039 272
- DE-A1-102011 117 195
- DATABASE WPI Week 201333 2013 Thomson Scientific, London, GB; AN 2013-G77270 XP002779403, & CN 102 894 108 A (BEIJING SANYUAN FOOD CO LTD) 30. Januar 2013 (2013-01-30)

## Beschreibung

Die Erfindung beschreibt ein Butterungsverfahren nach dem Oberbegriff des Anspruchs 1.

Auf dem Bereich der industriellen Butterungsverfahren hat sich die kontinuierliche Butterung mit einer Maschine nach Dr. Fritz aus dem Jahr 1941 durchgesetzt. Durch diese Maschine und das entsprechende Verfahren wurde eine gute und gleichmäßige Qualität der Butter bei geringen Fettverlusten sichergestellt.

Aufgrund des Fritz/Eisenreich - Verfahrens konnten die Arbeitsschritte der Schlagsahnebildung, der anschließenden Butterkornbildung, des Abtrennens von Buttermilch und des Knetens der Butter in einem kontinuierlichen Prozess teilweise automatisiert werden. Dabei werden die Prozesse der Butterkornbildung von Butterungstrommeln und das Kneten und Abpressen der Buttermasse von Abpressern mit motorisierten Schneckenantrieben gewährleistet.

Eine Verfeinerung des Automatisierungsprozesses war lange Zeit nur bedingt möglich, da sie von vielen Faktoren abhängt, die vorwiegend durch den Rahm als Ausgangsmaterial und die Verarbeitung desselben bestimmt werden. Neben den Ausgangseigenschaften des Rahms, beispielsweise Fettgehalt und vorangegangene Rahmreifung, sind Prozessparameter wie die Rahmtemperatur, die Zulaufleistung und die Schlägerdrehzahl wichtige Kenngrößen für den Butterungsprozess.

Aufgrund dieser stets wechselnden Eigenschaften des Rahms wird die Verarbeitung bisher oftmals noch manuell überwacht und bei Bedarf durch Änderung der Prozessparameter nachgestellt. Dabei sind eine ständige visuelle Kontrolle der Eigenschaften, sowie Erfahrungswerte und Fingerspitzengefühl nötig, um eine Regulierung vorzunehmen.

Das Vorgehen bei der bekannten manuellen Fahrweise entspricht dem Aufbau eines Regelkreises. Das Ergebnis des Prozesses - in diesem Falle die Qualität der Butter - wird beurteilt und entsprechend der Abweichung vom Sollzustand wird eine Prozessgröße erhöht oder erniedrigt. Dies ist aufwendig und da die Reaktionszeit von einer Änderung der Prozessgröße bis zur Qualitätsänderung am Austritt der Maschine mehrere Minuten beträgt, können manuelle Änderungen an den Prozessparametern nur sehr langsam und vorsichtig vorgenommen werden. Der Butterungsprozess weist also ein signifikantes Totzeitverhalten auf. Auf Grund des Totzeitverhaltens des Prozesses unterliegt der Grundwassergehalt der erzeugten Butter deshalb gewissen - unerwünschten - Schwankungen.

Es wurden bereits Anstrengungen unternommen, den Butterungsprozess durch geeignete Maßnahmen selbstregelnd unter Abmilderung des sogenannten Totzeitverhaltens des Prozesses zu gestalten. Diese sind aber nur teilweise erfolgreich gewesen.

So ist in der DE 10 2011 117 195 A1 ein Verfahren zur Optimierung eines automatisierten Butterungsprozesses beschrieben. Eine Annäherung an eine gewünschte Butterqualität wird dabei insbesondere durch eine elektronische Selbstregelung der Schlägerdrehzahl im Butterungszylinder erreicht. Die optimale Schlägerdrehzahl zur Phasenumkehrung wird elektronisch automatisch bzw. selbst nachgeregelt, wenn sich z.B. die Zulaufleistung, die Temperatur, der Rahmfettgehalt oder der Rahmreifungsgrad ändert.

Dieses Verfahren hat sich an sich bewährt. Es automatisiert aber nur einen Teil des Butterungsprozesses.

Analoges gilt für die gattungsgemäße DE 10 2009 039272 A1, welche die Merkmale des Oberbegriffs des Anspruchs 1 aufweist. Auch dieses Verfahren automatisiert nur einen Teil des Butterungsprozesses.

Vor diesem Hintergrund ist es die Aufgabe der vorliegenden Erfindung, eine weitere Verbesserung auf dem Gebiet der Automatisierung der Herstellung von Butter zu erreichen.

Die Erfindung löst diese Aufgabe mit den Merkmalen des Anspruchs 1.

Geschaffen wird ein Verfahren zur Herstellung von Butter bzw. ein Verfahren, mit dem Butter in einer Butterungsmaschine hergestellt wird, die mindestens einen Einlauf, mindestens einen Butterungszylinder mit einem drehbaren Schläger, wenigstens eine Nachbutterungstrommel und wenigstens einen ersten Abpresser und mindestens eine diesem nachgeschaltete Mischsektion aufweist, mit zumindest folgenden Schritten:
- in dem Butterungszylinder erfolgt in einem Schritt 100) mit einem drehbaren Schläger eine Bildung von Butterkorn und Buttermilch aus zugeführtem Rahm,
- in der Nachbutterungstrommel wird in einem Schritt 300) eine Nachbutterung durchgeführt, bei welcher eine Butterkorngröße eingestellt wird,
- in dem ersten Abpresser, der einen hohlen, insbesondere einen einfach oder doppel-hohlzylindrischen, Grundkörper aufweist, in dem sich eine drehbare oder zwei gegenläufig drehbare Förderschnecken befinden, deren Drehzahl oder deren gemeinsame Drehzahl durch einen drehzahlgeregelten Antrieb regelbar ist, wird in einem Schritt 400) das Butterkorn geknetet und vorzugsweise in eine homogene "Wasser in Öl Emulsion" - d.h. in eine Butter - umgewandelt, wobei auch der Grundwassergehalt der Butter reduziert wird,
- in der ersten Mischsektion werden in einem Schritt 500) die Größe bzw. Öffnungsweite der Austrittsöffnungen einer Drosseleinrichtung verändert,
- wobei einer oder beide der Schritte 400) und 500) elektronisch selbstregelnd durchgeführt werden.

Es wird zudem weiter nach Anspruch 1 in dem Schritt 400) der durch das Butterkorn bzw. die aus dem Butterkorn sich bildende Butter ausgeübte Druck im ersten Abpresser ermittelt und als eine erste Führungsgröße der elektronischen Regelung verwendet.

Und es wird weiter nach Anspruch 1 in dem Schritt 400) ein Füllstand im Abpresser ermittelt und als weitere zweite Führungsgröße der elektronischen Regelung verwendet.

Dabei weist nach Anspruch 1 weiter der erste Abpresser einen Füllstandssensor auf, wobei die Position des Füllstandssensors am Abpresser so gewählt wird, dass der Füllstandssensor in der Lage ist, einen Füllstand im Abpresser zu sensieren, der gleichbedeutend mit einer vollständigen Füllung des ersten Abpressers mit Butterkorn bzw. Butter ist.

Sodann kann nach Anspruch 2 in dem Schritt 400) auf einfache Weise die Drehzahl der Förderschnecke des ersten Abpressers als eine erste Stellgröße der elektronischen Regelung verwendet werden.

Zudem kann nach Anspruch 3 in dem Schritt 500) die Butter durch eine mit einer oder mehreren in ihrer Größe veränderbaren Öffnung(en) versehene Drosseleinrichtung aus der Mischsektion ausgelassen werden, wobei in dem Schritt 400) der Öffnungsgrad der Öffnung(en) der Drosseleinrichtung als eine zweite Stellgröße der elektronischen Regelung verwendet wird.

Der Abpressvorgang wird durch die Drehzahl der Schnecke im ersten Abpresser und durch den Öffnungsgrad der Drosseleinrichtung in der dazugehörigen Mischsektion geregelt. Beides erfolgt bei dem Verfahren nach DE 10 2011 117 195 A1 durch manuelle Einstellungsänderungen durch den Maschinenführer und wird durch die Erfindung vorteilhaft elektronisch automatisiert geregelt, was nach dem Stand der Technik nicht erwogen wurde, insbesondere, da es nicht gelungen war, geeignete Führungsgrößen für die elektronische Regelung auszuwählen und diese in geeigneter Weise zu messen und zu bestimmen. Dieses Problem löst die Erfindung.

Der Hauptzweck des einen oder der mehreren Abpresser ist der Transport der Butter mit einer durchsatzabhängigen Mindestschneckendrehzahl zur Vermeidung von Rückstau mit gleichzeitiger Reduzierung des Grundwassergehaltes durch den Abpressvorgang. Ein genügend geringer Grundwassergehalt beim Abpressvorgang kann nur bei einem vollständig gefüllten ersten Abpresser erzielt werden. Ein optimal gefüllter Abpresser erfordert dabei die ständige Beobachtung des Abpressers und ggf. ein manueller Eingriff in die Drehzahl der Förderschnecke des Abpressers.

Die Erfindung automatisiert in vorteilhafter Weise diesen Prozess und derart auch den folgenden Mischvorgang.

Die elektronische Regelung umfasst insofern eine elektronische Bestimmung des Füllungszustandes und des Druckes innerhalb des Abpressers. Durch eine Optimierung des Verhältnisses von Schneckendrehzahl zur Durchsatzmenge und der Feinregelung über den Öffnungsgrad einer Drosseleinrichtung kann das System schnell eingeregelt und mit stabilen Produktparameter gefahren werden. Die zweite Hauptaufgabe Kneten und Mischen wird im zweiten Abpresser (Kneter) in jedem Falle vollendet und kann ebenfalls automatisiert werden.

Die vorstehend beschriebene selbstlernende Regelung hat auch den Vorteil, dass durch die direkte Messung des Druckes und des Füllstandes im ersten Abpresser kaum Totzeiten im Regelkreis auftreten.

Weitere vorteilhafte Ausgestaltungen der Erfindung sind den Unteransprüchen zu entnehmen.

Ein Ausführungsbeispiel der Erfindung wird anhand der beigefügten Zeichnung erläutert, darüber hinaus werden Abbildungen aufgeführt, anhand welcher die Problemlösung veranschaulicht wird. Die Figuren zeigen:
- Fig.1: eine schematische Darstellung einer Butterungsmaschine, die im Wesentlichen nach dem Fritz/Eisenreich Verfahren betrieben wird;
- Fig. 2: eine Schnittdarstellung des ersten Abpressers der Maschine aus Fig. 1.

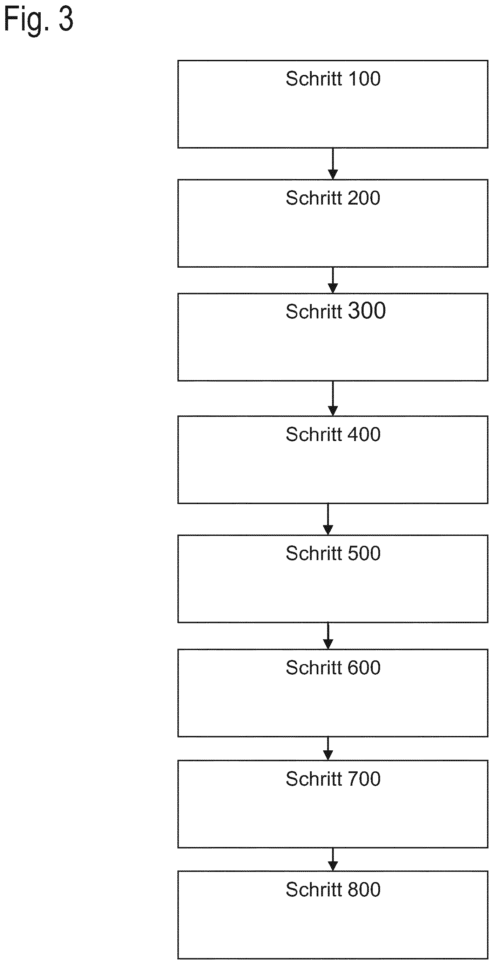

- Fig. 3: ein vereinfachtes Flussdiagram eines Ausführungsbeispiels eines erfindungsgemäßen Verfahrens.

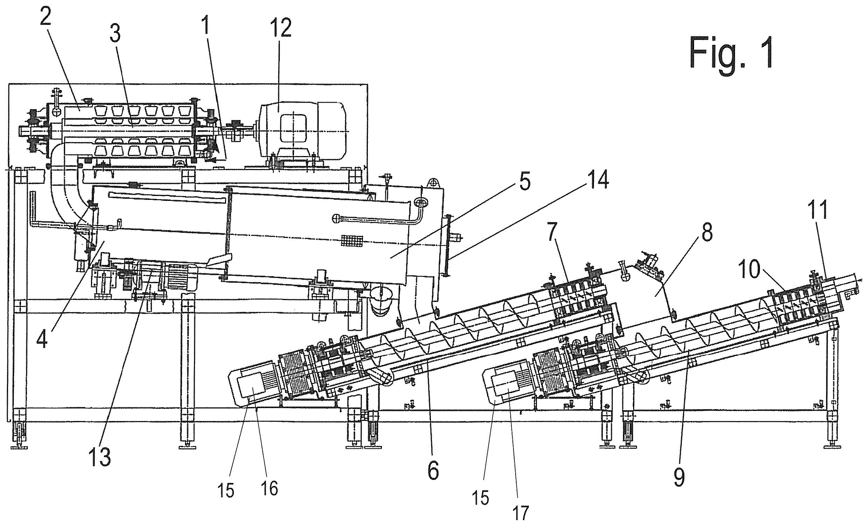

Fig. 1 zeigt eine für die Herstellung von Butter bereitgestellte Butterungsmaschine, die einen Einlauf 1 für Rahm als das Ausgangsprodukt zur Herstellung der Butter aufweist, sowie einen diesem nachgeschalteten Butterungszylinder 2 mit einem drehbar angetriebenen Schläger 3 für die Bildung von Butterkorn und Buttermilch aus zugeführtem Rahm. Der Schläger 3 wird durch einen Schlägerantrieb 12 angetrieben.

In dem Butterungszylinder 2 erfolgt somit in einem Schritt 100 eine Bildung von Butterkorn und Buttermilch aus zugeführtem Rahm.

Das aus dem Butterungszylinder 2 austretende Butterkorn kann sodann in eine Kühlsektion 4 überführt bzw. geleitet werden. In der Kühlsektion 4 erhält das Butterkorn eine härtere Konsistenz und lässt sich anschließend besser bearbeiten.

In der Kühlsektion kann somit in einem Schritt 200 eine Kühlung des Butterkorns erfolgen.

Aus der Kühlsektion 4 wird das derart gekühlte Butterkorn in eine Nachbutterungstrommel 5 geleitet. In der Nachbutterungstrommel 5 wird in einem Schritt 300 eine Nachbutterung durchgeführt. In diesem Nachbutterungsschritt wird die Butterkorngröße eingestellt. Die Nachbutterungstrommel 5 wird durch einen Antrieb 13 angetrieben.

Aus der Nachbutterungstrommel 5 wird das derart eingestellte Butterkorn in einen Einlauf 18 eines ersten Abpressers 6 geleitet. Der erste Abpresser 6 knetet in einem Schritt 400) das Butterkorn und presst aus diesem Wasser ab. Vorzugsweise wandelt er in einem Schritt 400) das Butterkorn in eine homogene "Wasser in Öl Emulsion" - d.h. in eine Butter - um und befreit gleichzeitig diese Butter von Buttermilchresten im Sinne einer Reduzierung des Grundwassergehaltes. Der erste Abpresser 6 wird durch einen Antrieb 16 angetrieben. Ein besonders wesentlicher Zweck des einen Abpressers 6 und ggf. eines weiteren Abpressers 9 ist insofern der Weitertransport der Butter mit einer durchsatzabhängigen Mindestschneckendrehzahl zur Vermeidung von Rückstau mit gleichzeitiger Reduzierung des Grundwassergehaltes der Butter durch den Abpressvorgang. Ein genügend geringer Grundwassergehalt beim Abpressvorgang kann nur bei einem vollständig gefüllten ersten Abpresser 6 erzielt werden. Die Drehzahl des ersten Abpressers 6 und somit seine Fördermenge in kg/min bzw. der von ihm aufgebaute Druck wird dazu nach dem Stand der Technik manuell vom Maschinenführer eingestellt.

An den ersten Abpresser 6 schließt sich an dessen Auslauf 19 wenigstens eine erste Mischsektion 7 an. In der ersten Mischsektion 7 werden in einem Schritt 500 zu der "Wasser in Öl Emulsion" bzw. zu der Butter aus Schritt 400 Wasser, Säurekonzentrate und/oder Salzlake zudosiert, um durch Mischung dieser Zutaten mit der Butter den Geschmack und die Konsistenz der Butter zu optimieren.

Sodann wird in einem Schritt 600 der Butter aus Schritt 500 in einer Vakuumkammer 8 Butter Luft entzogen, um deren Haltbarkeit zu erhöhen.

Sodann kann die Butter aus Schritt 600 in einen Einlauf eines zweiten Abpresser 9 geleitet werden, um in einem Schritt 700 weiteres Wasser abzupressen und derart den Wassergehalt weiter zu optimieren. An den Auslauf des zweiten Abpressers 9 schließt sich wiederum wenigstens eine Mischsektion - hier zweite Mischsektion 10 genannt - an. Diese sorgt in einem Schritt 800 durch ein Mischen für eine gleichmäßige Verteilung des Wassergehaltes in der Butter und eine Optimierung des Wassergehaltes. Der zweite Abpresser 9 wird durch einen Antrieb 17 angetrieben.

Mit einer Austragspumpe 11 wird der Ablauf der hergestellten Butter aus Schritt 800 aus der zweiten Mischsektion 10 und damit aus der Butterungsmaschine gewährleistet.

Eine optische Kontrolle der Nachbutterung kann zusätzlich durch ein Sichtfenster 14 erfolgen.

Zur Verarbeitung sensierter Werte sowie zur Durchführung einer Steuerung und Regelung des Butterungsverfahrens, insbesondere einer nachfolgend beschriebenen elektronischen Regelung, ist die Butterungsmaschine mit einer (hier nicht dargestellten) Steuer- und- und Regelungseinheit 15 versehen, die vorzugweise als Computer ausgebildet ist und zumindest mit den Messeinrichtungen und/oder Sensoreinrichtung und Antrieben und dgl. verbunden ist.

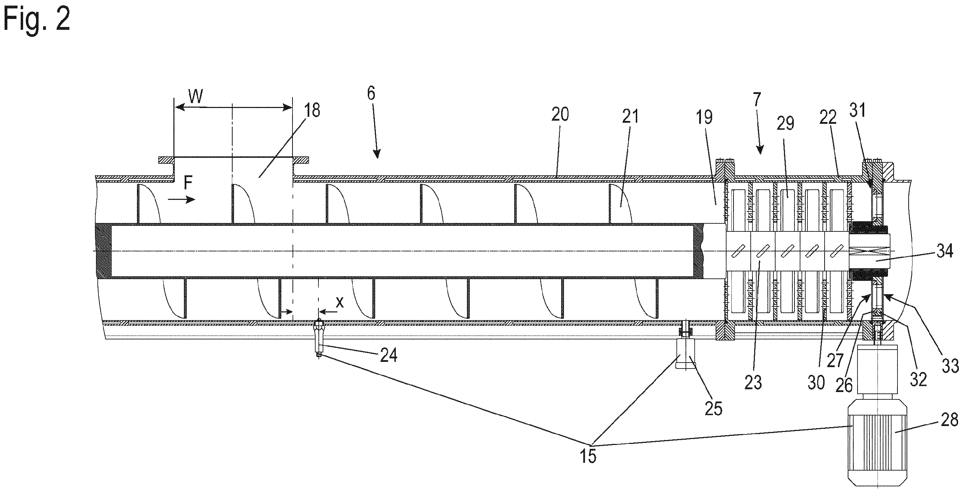

In der Fig. 2 ist der erste Abpresser 6 und die erste Mischzone 7 der Butterungsmaschine aus Fig. 1 in einem Vollschnitt dargestellt, dessen Aufbau und dessen Betrieb nachfolgend näher beschrieben wird. Der zweite Abpresser 9 und die zweite Mischzone 10 können in gleicher Weise aufgebaut sein und betrieben werden.

Der erste Abpresser 6 weist hier in bevorzugter Ausgestaltung einen doppel-hohlzylinderförmigen Grundkörper 20 auf. Der doppel-hohlzylindrische Grundkörper 20 weist den Einlauf 18 auf, der hier als Einlaufschacht ausgebildet ist. Durch den Einlauf 18 wird der erste Abpresser 6 quasi kontinuierlich mit gekühltem Butterkorn aus der Kühlsektion 4 bzw. der Nachbutterungstrommel 5 befüllt.

In dem doppel-hohlzylindrischen Grundkörper 20 des ersten Abpressers sind zwei gegenläufig drehbare Förderschnecken 21 angeordnet, die durch den Antrieb 16 (hier nicht dargestellt, siehe Fig. 1) in eine Drehbewegung versetzt werden und das Butterkorn bzw. die Butter in Richtung eines Auslasses 19 fördern. Der Antrieb 16 ist mit einer Einrichtung zur Drehzahlregelung ausgestattet.

Um die Beschreibung im nachfolgenden Text zu vereinfachen, wird nur noch von einem hohlzylindrischen Grundkörper 20 und einer Förderschnecke 21 gesprochen. Analog gilt dieses für den Grundkörper 22, die Mischwellen 23, die Mischerflügel 29 und die Lochscheiben 30. Die nachfolgende Beschreibung gilt insofern gleichermaßen für Ausgestaltungen mit einem einfach hohlzylindrischen Grundkörper und einer einfachen Schnecke wie für die vorstehend beschriebene bevorzugte Ausgestaltung mit einem doppel-hohlzylindrischen Grundkörper 20 des ersten Abpressers und mit zwei gegenläufig drehbaren Förderschnecken 21 darin.

Durch die Drehbewegung der Förderschnecke 21 in dem hohlzylindrischen Grundkörper 20 wird das Butterkorn im ersten Abpresser 6 in dem Schritt 700 geknetet und vorzugweise in eine homogene "Wasser in Öl Emulsion" umgewandelt. Gleichzeitig wird der Grundwassergehalt reduziert.

An den hohlzylindrischen Grundkörper 20 des ersten Abpressers 6 schließt sich die erste Mischsektion 7 an. Sie ist hier an den Auslauf 19 des Grundkörpers 20 angeflanscht. Die erste Mischsektion 7 weist hier ebenfalls einen hohlzylindrischen Grundkörper 22 auf. Der hohlzylindrische Grundkörper 22 der ersten Mischsektion 7 weist mehrere axial beabstandete Lochscheiben 30 auf. In dem hohlzylindrischen Grundkörper 22 befindet sich zudem eine Mischerwelle 23. Die Mischwelle 23 weist mehrere Mischerflügel 29 auf. Durch das Zusammenspiel der drehenden Mischerflügel 29 mit den feststehenden Lochscheiben 30 wird vorteilhaft eine homogene Vermischung der Butter mit den zudosierten Zuschlagsstoffen wie Wasser, Säurekonzentrate und/oder Salzlake erreicht. Ein Rückstau ist zu vermeiden. Es wird vielmehr eine kontinuierliche Förderung der Butter angestrebt

Die Mischerwelle 23 ist hier als Verlängerung der Förderschnecke 21 gestaltet, so dass die Förderschnecke 21 und die Mischerwelle 23 hier auch als eine einstückige, durchgehende Welle ausgebildet sind, die in einem Abpresserabschnitt die Förderschnecke 21 trägt und in einem Mischerabschnitt die Mischerwelle 23 ausbildet. Zu erkennen ist auch ein Lager 34 der Mischerwelle 23 bzw. der Förderschnecke 21.

Dadurch wird die Mischerwelle 23 ebenfalls durch den drehzahlgeregelten Antrieb 16 (hier nicht dargestellt, siehe Fig. 1) in eine Drehbewegung versetzt und läuft hier deshalb mit der gleichen Drehzahl um, wie die Förderschnecke 21. Dies ist vorteilhaft, aber nicht zwingend erforderlich.

Der erste Abpresser 6 weist weiterhin einen Füllstandssensor 24 auf. Die Position des Füllstandssensors 24 am Abpresser 6 ist vorteilhaft so gewählt, dass der Füllstandssensor 24 in der Lage ist, einen Füllstand des Abpressers 6 zu sensieren, der gleichbedeutend mit einer vollständigen oder jedenfalls im wesentlichen vollständigen Füllung des ersten Abpressers 6 mit Butterkorn ist. Dieser angestrebte Füllzustand bedeutet auch, dass der für dieses Verfahren besonders vorteilhafte maximaler Druck im Abpresser 6 erreicht werden kann.

Der Füllstandssensor 24 ist dazu vorzugsweise vorteilhaft im Übergangsbereich zwischen zwischen dem Einlauf(-schacht) 18 des Abpressers 6 für das Butterkorn und dem in Förderrichtung F ersten Schneckengang hinter dem Einlaufschacht 18 angeordnet. Dies ermöglicht es, einen Füllstand im ersten Abpresser 6 zu sensieren, der einer vollständigen Füllung des Abpressers 6 entspricht.

Nach einer vorteilhaften Variante kann der Füllstandssensor 24 an der dem Einlauf 18 gegenüberliegenden Seite des hohlzylindrischen Grundkörpers 20 des ersten Abpressers 6, parallel zu einer gedachten Mittellinie des Einlaufs 18 positioniert sein. In Ausdehnungsrichtung der Förderschnecke 21 des ersten Abpressers 6 ist der Füllstandssensor 24 von der am weitesten in Richtung des Auslaufs 19 des Abpressers 6 zugewandten Wandung des Einlasses 18 um ein Maß X beabstandet. Das Maß X beträgt bevorzugt zwischen 0 und 30 %, besonders bevorzugt zwischen 5 und 10% der lichten Weite W des Einlaufs 18.

Gleichzeitig bedeutet ein maximaler Füllstand im Abpresser 6 auch einen maximalen Druck innerhalb des Abpressers 6. Dies ist ein wünschenswerter bzw. angestrebter Zustand.

Der erste Abpresser 6 weist zur Sensierung des Druckes im Abpresser 6 einen Drucksensor 25 auf. Der Drucksensor 25 ist hier am hohlzylindrischen Grundkörpers 20 des ersten Abpresser 6 kurz vor dessen Auslauf 19 positioniert Der Drucksensor 25 kann vorteilhaft zwischen dem in Förderrichtung ausgebildeten Ende der Förderschnecke 20 (bzw. hinter deren letzten Schneckengang) und der Mischsektion 7 angeordnet sein.

Die erste Mischsektion 7 weist an ihrem auslaufseitigen Ende eine Drosseleinrichtung 31 auf, welche z.B. aus einem Wehr 32 mit Öffnungen 33 besteht, welche ganz oder teilweise mit einer hier innen liegenden Drosselscheibe 26 verschlossen werden können. Die Drosselscheibe 26 weist eine oder mehrere Öffnungen 27 auf und ist durch Einstellmittel, wie z.B. einen Stellmotor 28 verschiebbar, so dass der verbleibende Öffnungsquerschnitt der Öffnungen 33 des Wehrs 32 verstellbar ist. Die Drosselscheibe 26 bildet damit eine Art Lochblendenschieber aus. Alternativ ist es auch denkbar, mehrere angetriebene Schlitz- oder Irisblenden vorzusehen, die dann mit einem Stellmotor in ihrem Öffnungsquerschnitt veränderbar sind.

Beim Anfahren der Butterungsmaschine bleibt die Drosseleinrichtung 31 am Ende der ersten Mischsektion 7 zum Befüllen des Abpressers zunächst geschlossen. Butter gelangt nun über den Einlauf 18 in den ersten Abpresser 6 und wird dort durch die Förderschnecke 21 in die Mischsektion 7 gepresst. Nach dem Auffüllen der Mischsektion 7 mit Butter füllt sich der erste Abpresser 6 solange, bis die Butter den Füllstandssensor 24 erreicht.

Derart wird der maximale Füllstand des ersten Abpressers 6 sensiert, was die selbstlernende Druckregelung startet. Der Begriff "selbstlernend" bedeutet, dass die Regelung in der Lage ist, die Sollwerte der Führungsgrößen für die Regelung bei anlaufendem Prozess selbst zu bestimmen. Die selbstlernende Regelung regelt zunächst durchsatzabhängig die Drehzahl der Förderschnecke 21 des ersten Abpressers 6.

Die Feineinstellung des Drucks im ersten Abpresser 6 erfolgt durch die Regelung des Öffnungsgrades der Drosseleinrichtung 31. Durch das Prinzip "Größter Druck bei maximalem Füllstand" kann der optimale Arbeitspunkt des Antriebs 16 des Abpressers 6 durchsatzunabhängig vorgegeben werden.

Die selbstlernende Regelung hat also nun die Aufgabe, zum einen den Füllstand des Abpressers 6 stets auf optimalem Niveau zu halten und gleichzeitig an der Position des Drucksensors 25 einen definierten Drucksollwert zu halten.

Bei komplett gefülltem ersten Abpresser 6 und geschlossener Drosseleinrichtung 31 wird der in diesem Zustand erreichte Druck im ersten Abpresser 6 durch den Drucksensor 25 erfasst.

Ein Sollwert für die nun folgende Regelung wird vorzugweise etwas unterhalb des maximal möglichen Drucks (z.B. minus 5 - 20%, vorzugsweise minus 10%) gewählt und für die elektronische automatisierte Regelung als eine erste Führungsgröße zu Grunde gelegt.

Die Drehzahl der Förderschnecke 21 kann vorteilhaft so geregelt werden, dass der wenigstens eine Füllstandssensor 24 gerade bedeckt ist. Der sensierte Füllstand ist eine weitere Führungsgröße der elektronischen automatisierten Regelung.

Parallel wird die Öffnung der Drosseleinrichtung 31 so geregelt, dass der Druck am Drucksensor 25 etwas unter dem maximal möglichen Druck im ersten Abpresser 6 liegt, der wie oben beschrieben automatisch bzw. selbstlernend verfahrensparallel als Führungsgröße ermittelt wurde.

Bei Versuchen wurde ein typischer Wert für den maximal erreichbaren Druck bei maximalem Füllstand des ersten Abpressers 6 und geschlossener Drosseleinrichtung 31 mit 10 bar ermittelt. Bei vollständig geöffneter Drosseleinrichtung 31 sank der Druck auf 8 bar.

Der installierte Füllstandssensor 24 dient gleichzeitig als Überlaufsicherung zum Einlauf 18 und zur Nachbutterungstrommel 5. Hierdurch werden mögliche Schäden bei einem überfüllten und blockierenden ersten Abpresser 6 verhindert und die Prozesssicherheit der Maschine verbessert.

Die selbstlernende Druckregelung zur Feineinstellung des max. Füllstandes kann mit einer Sensorik ausgestattet sein, die nach einem Wirkprinzip wie Impedanzspektroskopie, Ultraschall oder Radiometrie arbeitet. Sie kann aber auch auf einem anderen Wirkprinzip beruhen.

Die Drehzahl der Förderschnecke des zweiten Abpressers 9 kann über die Drehzahl der Förderschnecke 19 des ersten Abpressers 6 als Stellgröße synchronisiert und geregelt werden.

Um ein Überfüllen des zweiten Abpressers 9 zu verhindern, kann die Drehzahl der Förderschnecke des zweiten Abpressers 9 geringfügig oberhalb der Drehzahl der Förderschnecke 21 des ersten Abpressers 6 geregelt werden.

Auch der zweite Abpresser 9 kann derart automatisiert elektronisch geregelt werden.

Diese Regelung kann analog zur Regelung des ersten Abpressers 6 bzw. der Schritte 400 und 500 in Abhängigkeit von der Regelung des ersten Abpressers 6 erfolgen. Es kann aber auch einfach an der Förderschnecke des zweiten Abpressers 9 stets eine Drehzahl etwas - z.B. 1 - 10 % - oberhalb der Drehzahl der Förderschnecke 21 des ersten Abpressers 6 eingestellt werden.

Die automatische Abpresser- und Drosselscheibenregelung kann vorteilhaft auch als eine vorteilhafte Ergänzung zum Verfahren zur Optimierung eines automatisierten Butterungsprozesses nach der technischen Lehre der DE 10 2011 117 195 A1 genutzt werden. Damit ist der Butterungsvorgang weitestgehend bzw. in praktisch relevantem Maß ganz automatisierbar.

Dann wird in dem Schritt 100) mindestens ein Kennwert des Rahmes gemessen oder vorgegeben und es erfolgt eine Erfassung eines Istwertes der momentanen Antriebsleistung des Schlägers und es wird ein Sollwert der Antriebsleistung des Schlägers in Abhängigkeit von dem Kennwert ermittelt und die Schlägerdrehzahl eingeregelt, bis dieser Sollwert der Antriebsleistung erreicht wird.

Es ist vorteilhaft, wenn in dem Schritt 100) als der Kennwert die Rahmtemperatur und/oder der Rahmfettgehalt verwendet wird.

Durch die Automatisierung der beiden für den automatischen Abbutterungsprozess wichtigsten Einflussfaktoren (Schritte 100 und 400 bzw. 500), kann eine Butterungsmaschine vorteilhaft voll automatisch betrieben werden.

Zusätzlich wird durch die Abpresser- und Drosselscheibenregelung ein optimal stabil niedriger Grundwassergehalt erreicht, wodurch der Butterungsprozess und damit die Butterungsmaschine vorteilhaft prozesssicherer und mit geringer Abweichung vom Sollwert an der Dosierobergrenze für Wasser gefahren und eine optimale Butterausstoßmenge erreicht werden können.

### Bezugszeichen

| | |
|---|---|
| Einlauf | 1 |
| Butterungszylinder | 2 |
| Schläger | 3 |
| Kühlsektion | 4 |
| Nachbutterungstrommel | 5 |
| Abpresser | 6 |
| Mischsektion | 7 |
| Vakuumkammer | 8 |
| Abpresser | 9 |
| Mischsektion | 10 |
| Austragspumpe | 11 |
| Schlägerantrieb | 12 |
| Antrieb | 13 |
| Sichtfenster | 14 |
| Mess- und Steuereinheit | 15 |
| Antrieb | 16 |
| Antrieb | 17 |
| Einlauf | 18 |
| Auslauf | 19 |
| Grundkörper | 20 |
| Förderschnecke | 21 |
| Grundkörper | 22 |
| Mischerwelle | 23 |
| Füllstandssensor | 24 |
| Drucksensor | 25 |
| Drosselscheibe | 26 |
| Öffnung | 27 |
| Stellmotor | 28 |
| Mischerflügel | 29 |
| Lochscheibe | 30 |
| Drosseleinrichtung | 31 |
| Wehr | 32 |
| Öffnungen | 33 |
| Lager | 34 |
| Schritte | 100, 200, 300, 400, 500, 600, 700, 800 |
| Maß | X |
| Weite | W |
| Förderrichtung | F |

## Patentansprüche

1. Verfahren, mit dem Butter in einer Butterungsmaschine hergestellt wird, die mindestens einen Einlauf (1), mindestens einen Butterungszylinder (2) mit einem drehbaren Schläger (3), wenigstens eine Nachbutterungstrommel (5) und wenigstens einen ersten Abpresser (6) und mindestens eine diesem nachgeschaltete Mischsektion (7) aufweist, wobei wenigstens folgende Schritte vorgesehen sind:
- in dem Butterungszylinder (2) erfolgt in einem Schritt 100) mit einem drehbaren Schläger (3) eine Bildung von Butterkorn und Buttermilch aus zugeführtem Rahm,
- in der Nachbutterungstrommel (5) wird in einem Schritt 300) eine Nachbutterung durchgeführt, bei welcher eine Butterkorngröße eingestellt wird,
- in dem ersten Abpresser (6), der einen hohlen Grundkörper (20) aufweist, in dem sich eine oder zwei Förderschnecken (21) befindet/befinden, deren Drehzahl durch einen drehzahlgeregelten Antrieb (16) regelbar ist, wird in einem Schritt 400) das Butterkorn geknetet, wobei zudem der Grundwassergehalt der Butter reduziert wird,
- in der ersten Mischsektion (7) in einem Schritt 500) wird der Querschnitt von einer oder mehreren Austrittsöffnungen einer Drosseleinrichtung (31) verändert,
**dadurch gekennzeichnet, dass**
- einer oder beide der Schritte 400) und 500) elektronisch selbstregelnd durchgeführt werden,
- wobei in dem Schritt 400) der durch das Butterkorn bzw. die Butter ausgeübte Druck im ersten Abpresser (6) ermittelt wird und als eine erste Führungsgröße der elektronischen Regelung verwendet wird,
- wobei in dem Schritt 400) ein Füllstand im Abpresser (6) ermittelt wird und als weitere zweite Führungsgröße der elektronischen Regelung verwendet wird,
- wobei der erste Abpresser (6) einen Füllstandssensor (24) aufweist, wobei die Position des Füllstandssensors (24) am Abpresser (6) so gewählt wird, dass der Füllstandssensor (24) in der Lage ist, einen Füllstand im Abpresser (6) zu sensieren, der gleichbedeutend mit einer vollständigen Füllung des ersten Abpressers (6) mit Butterkorn bzw. Butter ist.

2. Verfahren nach Anspruch 1, **dadurch gekennzeichnet, dass** in dem Schritt 400) die Drehzahl der Förderschnecke (21) des ersten Abpressers (6) als eine erste Stellgröße der elektronischen Regelung verwendet wird.

3. Verfahren nach einem der vorgenannten Ansprüche, **dadurch gekennzeichnet, dass** in dem Schritt 500) die Butter durch eine mit einer oder mehreren in ihrer Größe veränderbaren Öffnung(en) versehene Drosseleinrichtung (31) aus der Mischsektion (7) ausgelassen wird, und dass in dem Schritt 400) der verbleibende Öffnungsquerschnitt bzw. Öffnungsgrad der Öffnungen der Drosseleinrichtung (31) als eine zweite Stellgröße der elektronischen Regelung verwendet wird.

4. Verfahren nach einem der vorstehenden Ansprüche, **dadurch gekennzeichnet, dass** der erste Abpresser (6) einen Drucksensor (25) aufweist, der vorzugweise im hohlzylindrischen Grundkörper (20) des ersten Abpressers (6) kurz vor dessen Auslauf (19) positioniert ist.

5. Verfahren nach einem der vorstehenden Ansprüche, **dadurch gekennzeichnet, dass** der Sollwert des Drucks am auslaufseitigen Ende des ersten Abpressers (6) maximal 10 bar, minimal 8 bar und vorzugsweise 9 bar beträgt.

6. Verfahren nach einem der vorstehenden Ansprüche, **dadurch gekennzeichnet, dass** die Führungsgrößen bzw. Sollwerte der Führungsgrößen während des Verfahrens bzw. während einer Anlaufphase des Verfahrens selbstlernend bestimmt werden.

7. Verfahren nach einem der vorgenannten Ansprüche, **dadurch gekennzeichnet, dass** in einem dem Schritt 500) nachfolgenden Schritt 600) der Butter in einer Vakuumkammer (8) Luft entzogen wird, um die Haltbarkeit der Butter zu erhöhen.

8. Verfahren nach Anspruch 7, **dadurch gekennzeichnet, dass** in einem dem Schritt 600) nachfolgenden Schritt 700) die Butter in einen Einlauf eines weiteren, zweiten Abpresser (9) geleitet wird, um weiteres Wasser abzupressen und den Wassergehalt zu Optimieren.

9. Verfahren nach Anspruch 8, **dadurch gekennzeichnet, dass** in einem dem Schritt 700) nachfolgenden Schritt 800) in einer zweiten Mischsektion (10) durch Mischen eine gleichmäßige Verteilung des Wassergehaltes in der Butter und eine Optimierung des Wassergehaltes der Butter erreicht wird.

10. Verfahren nach einem der vorgenannten Ansprüche 7 bis 9, **dadurch gekennzeichnet, dass** einer oder beide der Schritte 600) und 700) elektronisch geregelt werden.

11. Verfahren nach einem der vorgenannten Ansprüche, **dadurch gekennzeichnet, dass** in dem Schritt 100) mindestens ein Kennwert des Rahmes gemessen oder vorgegeben wird und dass eine Erfassung eines Istwertes der momentanen Antriebsleistung des Schlägers erfolgt und ein Sollwert der Antriebsleistung des Schlägers in Abhängigkeit von dem Kennwert ermittelt wird und dass die Schlägerdrehzahl eingeregelt wird, bis dieser Sollwert der Antriebsleistung erreicht wird.

12. Verfahren Anspruch 11, **dadurch gekennzeichnet, dass** in dem Schritt 100) als der Kennwert die Rahmtemperatur und/oder der Rahmfettgehalt verwendet wird.

13. Verfahren nach einem der vorgenannten Ansprüche, **dadurch gekennzeichnet, dass** die zusätzliche optische Kontrolle des Butterungsprozesses in der Nachbutterungstrommel (5) über ein Sichtfenster (14) erfolgt.

## Claims

1. A method by which butter is produced in a butter-making machine, which comprises at least one inlet (1), at least one butter-making cylinder (2) with a rotatable beater (3), at least one butter-refining drum (5) and at least one first extraction press (6), and at least one mixing section (7) arranged downstream thereof, wherein at least the following steps are provided:
- in one step 100), in the butter-making cylinder (2) a rotatable beater (3) is used to form butter grains and butter milk from cream supplied to the cylinder,
- in one step 300), in the butter-refining drum (5), a butter-refining process is performed, in which a butter grain size is adjusted,
- in one step 400), in the first extraction press (6), which comprises a hollow body (20) containing one or two screw conveyors (21), the speed of which can be regulated by an adjustable-speed drive (16), the butter grains are kneaded, wherein the basic water content of the butter is also reduced,
- in a step 500), in the first mixing section (7), the cross section of one or more outlet openings of a restrictor (31) is varied,
**characterized in that**
- one or both of the steps 400) and 500) are performed in an electronically self-regulating manner,
- wherein in the step 400), the pressure in the first extraction press (6) exerted by the butter grains or the butter is determined and used as a first reference variable of the electronic control,
- wherein in the step 400) a filling level in the extraction press (6) is determined and is used as a further second reference variable of the electronic control,
- wherein the first extraction press (6) comprises a filling level sensor (24), wherein the position of the filling level sensor (24) on the extraction press (6) is selected so that the filling level sensor (24) is able to sense a filling level in the extraction press (6) which is equivalent to a complete filling of the first extraction press (6) with butter grains or butter.

2. The method as claimed in claim 1, **characterized in that** in the step 400) the speed of the screw conveyor (21) of the first extraction press (6) is used as a first control variable of the electronic control.

3. The method as claimed in one of the preceding claims, **characterized in that** in the step 500) the butter is discharged from the mixing section (7) through a restrictor (31) provided with one or more variable-sized openings, and that in the step 400) the opening cross section or aperture of the openings in the restrictor (31) is used as a second control variable of the electronic control.

4. The method as claimed in one of the preceding claims, **characterized in that** the first extraction press (6) comprises a pressure sensor (25), which is preferably positioned in the hollow-cylindrical body (20) of the first extraction press (6) just in front of its outlet (19).

5. The method as claimed in one of the preceding claims, **characterized in that** the set value of the pressure at the outlet-side end of the first extraction press (6) represents a maximum of 10 bar, a minimum of 8 bar and preferably 9 bar.

6. The method as claimed in one of the preceding claims, **characterized in that** the reference variables or set values of the reference variables are determined by self-learning during the process and/or during a start-up phase of the process.

7. The method as claimed in one of the preceding claims, **characterized in that** in a step 600) following the step 500) the butter has air extracted from it in a vacuum chamber (8), in order to improve keeping qualities of the butter.

8. The method as claimed in claim 7, **characterized in that** in a step 700) following the step 600) the butter is fed into an inlet of a further, second extraction press (9), in order to extract more water and to optimize the water content.

9. The method as claimed in claim 8, **characterized in that** in a step 800) following the step 700), through mixing in a second mixing section (10) a uniform distribution of the water content in the butter and an optimizing of the water content of the butter are achieved.

10. The method as claimed in claim 7 to 9, **characterized in that** one or both of the steps 600) and 700) is/are electronically regulated.

11. The method as claimed in one of the preceding claims, **characterized in that** in the step 100) at least one characteristic value of the cream is measured or predetermined and that an actual value for the instantaneous drive output of the beater is registered, and a set value for the drive output of the beater is determined as a function of the characteristic value and that the beater speed is adjusted until this set value for the drive output is attained.

12. The method as claimed in claim 11, **characterized in that** in the step 100) the cream temperature and/or the cream fat content is used as the characteristic value.

13. The method as claimed in one of the preceding claims, **characterized in that** the additional visual check on the butter-making process in the butter-refining drum (5) is performed via a viewing window (14).

## Revendications

1. Procédé pour la fabrication de beurre dans une baratte qui comprend au moins une entrée (1), au moins un cylindre de barattage (2) avec un battoir rotatif (3), au moins un tambour de post-barattage (5) et au moins un premier pressoir d'extraction (6) et au moins une section de malaxage (7) faisant suite à celui-ci, dans lequel les étapes suivantes, au moins, sont prévues :
- dans une étape 100), dans le cylindre de barattage (2), des grains de beurre et du babeurre sont formés avec un battoir rotatif (3) à partir de crème apportée ;
- un post-barattage est réalisé dans le tambour de post-barattage (5) dans une étape 300), au cours duquel une granulométrie des grains de beurre est ajustée ;
- les grains de beurre sont pétris dans une étape 400), dans le premier pressoir d'extraction (6) qui présente un corps de base (20) creux dans lequel se trouvent une ou deux vis sans fin de transport (21) dont la vitesse peut être réglée par un entraînement (16) à vitesse de rotation régulée, et la teneur en eau de base du beurre est en outre réduite ;
- la section d'une ou plusieurs ouvertures de sortie d'un dispositif d'étranglement (31) est modifiée dans une étape 500) dans la première section de malaxage (7) ;
**caractérisé en ce que**
- une des étapes 400) et 500) ou les deux sont exécutées avec une autorégulation électronique ;
- la pression exercée par les grains de beurre ou le beurre dans le premier pressoir d'extraction (6) étant déterminée dans l'étape 400) et utilisée comme première valeur de pilotage de la régulation électronique ;
- un niveau de remplissage dans le pressoir d'extraction (6) étant déterminé dans l'étape 400) et utilisé comme deuxième valeur de pilotage de la régulation électronique ;
- le premier pressoir d'extraction (6) comportant un capteur de niveau de remplissage (24), la position du capteur de niveau de remplissage (24) sur le pressoir d'extraction (6) étant choisie de telle manière que le capteur de niveau de remplissage (24) est capable de détecter un niveau de remplissage dans le pressoir d'extraction (6) qui équivaut à un remplissage complet du premier pressoir d'extraction (6) avec des grains de beurre ou du beurre.

2. Procédé selon la revendication 1, **caractérisé en ce que**, dans l'étape 400), la vitesse de rotation de la vis sans fin de transport (21) du premier pressoir d'extraction (6) est utilisée comme première valeur de réglage de la régulation électronique.

3. Procédé selon l'une des revendications précédentes, **caractérisé en ce que**, dans l'étape 500), le beurre est extrait de la section de malaxage à travers un dispositif d'étranglement (31) muni d'une ou plusieurs ouvertures de taille modifiable et **en ce que**, dans l'étape 400), la section d'ouverture restante ou le degré d'ouverture des ouvertures du dispositif d'étranglement (31) est utilisée comme deuxième valeur de réglage de la régulation électronique.

4. Procédé selon l'une des revendications précédentes, **caractérisé en ce que** le premier pressoir d'extraction (6) comporte un capteur de pression (25) qui est de préférence positionné dans le corps de base (20) en forme de cylindre creux du premier pressoir d'extraction (6), peu avant la sortie (19) de celui-ci.

5. Procédé selon l'une des revendications précédentes, **caractérisé en ce que** la valeur de consigne de la pression à l'extrémité de sortie du premier pressoir d'extraction (6) est au maximum de 10 bars, au minimum de 8 bars et de préférence de 9 bars.

6. Procédé selon l'une des revendications précédentes, **caractérisé en ce que** les valeurs de pilotage ou les valeurs de consigne des valeurs de pilotage sont déterminées pendant le procédé ou pendant une phase de démarrage du procédé par apprentissage automatique.

7. Procédé selon l'une des revendications précédentes, **caractérisé en ce que**, dans une étape 600) suivant l'étape 500), de l'air est extrait du beurre dans une chambre à vide (8) afin d'augmenter sa durée de conservation.

8. Procédé selon la revendication 7, **caractérisé en ce que**, dans une étape 700) suivant l'étape 600), le beurre est acheminée dans une entrée d'un deuxième pressoir d'extraction (9) afin d'exprimer encore de l'eau et d'optimiser la teneur en eau.

9. Procédé selon la revendication 8, **caractérisé en ce que**, dans une étape 800) suivant l'étape 700), une répartition uniforme de la teneur en eau du beurre est atteinte dans une deuxième section de malaxage (10) et la teneur en eau du beurre est optimisée par le malaxage.

10. Procédé selon l'une des revendications 7 à 9, **caractérisé en ce qu'**une des étapes 600) et 700) ou les deux sont régulées électroniquement.

11. Procédé selon l'une des revendications précédentes, **caractérisé en ce que**, dans l'étape 100), au moins une valeur caractéristique de la crème est mesurée ou spécifiée et **en ce qu'**une valeur réelle de la puissance d'entraînement instantanée du battoir est acquise et une valeur de consigne de puissance d'entraînement du battoir en fonction de la valeur caractéristique est déterminée et **en ce que** la vitesse de rotation du battoir est régulée jusqu'à ce que cette valeur de consigne de puissance d'entraînement soit atteinte.

12. Procédé selon la revendication 11, **caractérisé en ce que**, dans l'étape 100), la valeur caractéristique est la température de la crème et/ou la teneur en matière grasse de la crème.

13. Procédé selon l'une des revendications précédentes, **caractérisé en ce que** le contrôle visuel supplémentaire du processus de barattage a lieu dans le tambour de post-barattage (5) via un hublot (14).
